# EUROPÄISCHE PATENTANMELDUNG

(11) **EP 1 128 176 A2**
(43) Veröffentlichungstag der Anmeldung: **29.08.2001**
(21) Anmeldenummer: 01103170.5
(22) Anmeldetag: 10.02.2001
(51) Int. Cl.: G01M 1/32

(54) **Strang aus miteinander verbundenen metallischen Auswuchtgewichtselementen**

(30) Priorität: 23.02.2000 DE 10008393
(71) Anmelder: Schenck RoTec GmbH, 64293 Darmstadt (DE)
(72) Erfinder: Rogalla, Martin, 64297 Darmstadt (DE)
(74) Vertreter: Brandt, Ernst-Ulrich, Dipl.-Phys., Dipl.-Ing.

(57) **Zusammenfassung**

Um bei einem Strang (1) aus miteinander verbundenen metallischen Auswuchtgewichtselementen (2) hoher Dichte Auswuchtgewichte abtrennen zu können, deren Material vollständig gegenüber der Unwucht gekapselt ist, wird vorgeschlagen, daß der Strang (1) eine die Auswuchtgewichtselemente (2) einhüllende verformbare Oberflächenschicht (8, 8', 8'') aufweist, die sich nach dem Abtrennvorgang auch über die Trennflächen (19) erstreckt oder daß die metallischen Auswuchtgewichtselemente (2) eine sie vollständig umhüllende Oberflächenschicht aufweisen und die Auswuchtgewichtselemente (2) über die Oberflächenschicht (9) zum Strang (1) verbunden sind.

## Beschreibung

Die Erfindung bezieht sich auf einen Strang aus miteinander verbundenen metallischen Auswuchtgewichtselementen hoher Dichte, bei dem eine Oberflächenschicht für metallische Bereiche des Stranges vorgesehen ist und von dem Auswuchtgewichte bestimmter Größe abtrennbar sind.

Beim Auswuchten von Rotoren, insbesondere aber beim Auswuchten von Kraftfahrzeugrädern, kommen in verstärktem Maße Auswuchtgewichte zum Einsatz, die von einem Strang eines Ausgangsmaterials abgetrennt werden, da sie leicht zu handhaben sind und darüberhinaus eine geringe Bauhöhe aufweisen, was sich insbesondere beim Anbringen an der Radinnenseite eines Kraftfahrzeugrades wegen des dort zur Verfügung stehenden knappen Bauraums als vorteilhaft erweist.

Aus der DE 298 05 456 U1 ist bekannt, zwischen einzelnen Gewichtselementen des bandförmigen Ausgangsmaterials tiefe Einschnitte vorzusehen, mittels derer ein leichtes Abtrennen der benötigten Auswuchtgewichte vom Strang möglich ist. Mittels einer Klebeschicht können die abgetrennten Auswuchtgewichte am auszuwuchtenden Rotor befestigt werden. Der obigen Veröffentlichung ist zu entnehmen, daß die freien Oberflächen des metallischen Bereichs des Strangs mit einem Oberflächenschutz wie z.B. einer Lack- oder Pulverbeschichtung versehen werden können. Die Trennflächen der von dem bandförmigen Ausgangsmaterial abgetrennten Auswuchtgewichte bleiben jedoch unbeschichtet, was im Hinblick auf Fragen des Umweltschutzes unbefriedigend ist.

Der Erfindung liegt die Aufgabe zugrunde, einen Strang aus miteinander verbundenen metallischen Auswuchtgewichtselementen hoher Dichte zu schaffen, von dem Auswuchtgewichte bestimmter Größe abtrennbar sind, deren Metall vollständig gegenüber der Umwelt abgekapselt ist sowie geeignete Verfahren zur Herstellung und zur Abtrennung und Applikation derartiger Auswuchtgewichte vorzuschlagen.

Diese Aufgabe wird in einer ersten Ausgestaltung der Erfindung dadurch gelöst, daß der Strang eine die Auswuchtgewichtselemente einhüllende verformbare Oberflächenschicht aufweist und daß die Trennflächen vollständig umhüllt sind.

Nach einer zweiten Ausgestaltung der Erfindung wird die Aufgabe dadurch gelöst, daß die metallischen Auswuchtgewichtselemente eine sie vollständig umhüllende Oberflächenschicht aufweisen und daß die Auswuchtgewichtselemente über die Oberflächenschicht zum Strang verbunden sind.

Durch beide Ausgestaltungen der Erfindung wird in vorteilhafter Weise sichergestellt, daß das Metall hoher Dichte, üblicherweise Blei, der vom Strang abgetrennten Auswuchtgewichte vollständig gegenüber der Umgebung gekapselt ist und eine Umweltbelastung durch Auswuchtgewichte nicht auftreten kann. Die Erfindung hat darüberhinaus den Vorteil, daß die Oberflächenausbildung der Auswuchtgewichte, insbesondere ihrer Farbgebung mittels der Oberflächenschicht beliebig gewählt werden kann.

Bei der ersten Ausgestaltung der Erfindung sind die Wuchtgewichtselemente in bezüglich der Herstellung vorteilhafter Weise über Materialfortsätze ihres Materials miteinander verbunden. Diese Kette von miteinander verbundenen Wuchtgewichtselementen läßt sich leicht handhaben, was ihre Einhüllung mit einer verformbaren Oberflächenschicht erleichtert. Durch den Abtrennvorgang von Auswuchtgewichten erfolgt auf einfachste Weise eine vollständige Beschichtung der Abtrennflächen am Strangende und am Auswuchtgewicht vorzugsweise mit dem verformbaren Material der Umhüllungsschicht, das bei diesem Vorgang in den Trennbereichen in genügender Dicke zur Verfügung steht und als Schicht über die Trennflächen gezogen wird. Die verformbare Oberflächenschicht wird auf einfache Weise durch Gießen, Spritzen, mittels Pulverbeschichtung oder mittels anderer geeigneter Verfahren aufgebracht. Beim Trennvorgang kann vorteilhaft jedoch auch zusätzliches Material gleicher oder unterschiedlicher Materialzusammensetzung, beispielsweise in Folienform, vor das Trennwerkzeug gebracht und bei der Trennbewegung über die Trennflächen gezogen werden.

Besonders vorteilhaft ist eine Weiterbildung der Erfindung, bei der die verformbare Oberflächenschicht durch eine den Strang einhüllende verformbare Folie gebildet ist, beispielsweise durch eine Schrumpf-Schlauchfolie, die über die Kette aus Auswuchtgewichtselementen gezogen wird.

Bei der zweiten Ausgestaltung der Erfindung sind die einzelnen Auswuchtgewichtselemente über die sie vollständig umhüllende Oberflächenschicht zum Strang verbunden. Vorteilhaft im Hinblick auf den Abtrennvorgang ist der Verlauf der Abtrennflächen nur in den Verbindungsbereichen aus dem Material der Oberflächenschicht ohne Berührung des Bleimaterials, da bei dieser Ausgestaltung der Erfindung Verformungseigenschaften bzw. das Fließverhalten der Oberflächenschicht kaum eine Rolle spielen und unberücksichtigt bleiben können. Im Hinblick auf die Verbindungsfunktion der Oberflächenschicht werden gezielt Materialien mit hoher Zugfestigkeit eingesetzt.

In einer vorteilhaften Weiterbildung der Erfindung ist vorgesehen, daß die Oberflächenschicht als mehrteilige Schicht aus einer ersten und einer zweiten Oberflächenschicht ausgebildet ist und daß die erste Oberflächenschicht als Trägerschicht bzw. Unterlage für die Auswuchtgewichtselemente ausgebildet ist und die zweite Oberflächenschicht die Auswuchtgewichtselemente abdeckt und dicht mit der ersten Oberflächenschicht (Trägerschicht) verbunden ist. Die erste und die zweite Oberflächenschicht können aus optimal ausgewählten Materialien bestehen, z.B. die Trägerschicht als Schicht mit hoher Zugfestigkeit als Folie aus Stahl oder als Schicht mit Stahl bzw. Textilgewebeverstärkung und die zweite Oberflächenschicht als Schicht oder Folie eines leicht verformbaren thermoplastischen Kunststoffs.

In beiden Ausgestaltungen der Erfindung kann als zweite Oberflächenschicht auch beispielsweise eine dünne, gut verformbare Metallfolie vorgesehen werden.

Vorteilhaft im Hinblick auf leichte Trennbarkeit ist eine Weiterbildung der Erfindung nach den Merkmalen des Anspruchs 5. Die Einschnitte quer zur Stranglängsrichtung definieren einen Stegbereich, der zum einen eine Solltrennstelle definiert und zum anderen bei ausreichender Breite der Einschnitte eine Winkelbeweglichkeit auch des abgetrennten Auswuchtgewichts in Hinblick auf seine Längsrichtung erlaubt, so daß das Auswuchtgewicht auf einfachste Weise selbst dort an der Felge appliziert werden kann, wo diese Flächenbereiche aufweist, die zur Radachse beispielsweise kegelförmig verlaufen oder räumlich gekrümmt sind; damit ist eine hohe Auswuchtgenauigkeit gewährleistet, da nicht auf benachbarte zylinderförmige Felgenbereiche ausgewichen werden muß.

Die Weiterbildung nach dem Anspruch 6 definiert in einfacher Weise eine Solltrennstelle und erlaubt bei keilförmiger Ausbildung einerseits ein Aufrollen des Strangs zu einer Vorratsrolle und andererseits auch eine leichter erzielbare Krümmung des Auswuchtgewichts in seiner Längsrichtung, was ebenfalls die Applikation erleichtert.

Durch eine die Merkmale der Ansprüche 5 und 6 gemeinsam aufweisende Ausgestaltung werden die Applikationsmöglichkeiten verbessert.

Durch Ausbildung des Strangs mit trapezförmigem Querschnitt ergibt sich eine größere Basisfläche, was als vorteilhaft im Hinblick auf das Haftvermögen des applizierten Auswuchtgewichts anzusehen ist.

Ein hohes Gewicht pro Längeneinheit weist die Weiterbildung nach dem Anspruch 10 auf, da die einzelnen Auswuchtgewichtselemente ohne Umhüllung nahezu den trapezförmigen Bandquerschnitt ausfüllen.

Für ein automatisiertes Handhaben und Anbringen der Auswuchtgewichte besonders vorteilhaft ist eine Weiterbildung der Erfindung, bei der an zwei gegenüberliegenden geneigten Seitenflächen nahe der Deckfläche Vorsprünge und/oder Vertiefungen angeordnet sind.

Die Weiterbildung nach dem Anspruch 13 erweist sich insbesondere bei einem Strang mit trapezförmigem Querschnitt als vorteilhaft, da die Klebefläche dann groß ist und keine Unterbrechungen aufweist.

In Anspruch 14 ist ein fertigungstechnisch einfaches Verfahren zur Herstellung des Strangs aus miteinander verbundenen metallischen Auswuchtgewichtselementen hoher Dichte angegeben, da der bandförmige Träger die Handhabung während der Herstellung sehr erleichtert. In einer Weiterbildung des Verfahrens ist vorgesehen, daß das Band mit seitlichen Einschnitten versehen wird, die beispielsweise aus Gründen der Handhabbarkeit und der Stabilität des Bandes kurz vor dem Ende des Herstellungsprozesses angebracht werden können. Das Anbringen der Einschnitte vor der Beschichtung kann fertigungsgünstig durch z.B. Stanzen eines den Träger bildenden Blechbandes erfolgen.

Das erfindungsgemäße Verfahren nach Anspruch 18 sieht die Trennung in quer verlaufenden Vertiefungen des Stranges vor, wobei bei maschineller Abtrennung zur Verbesserung der Genauigkeit die Vertiefungen zur Steuerung des Längsvorschubes des Strangs herangezogen werden können. Bei einer vorteilhaften Ausgestaltung ist vorgesehen, daß zum Abtrennvorgang das abzutrennende Strangstück und das benachbarte Strangstück winklig zueinander angeordnet werden, so daß die keilförmige Vertiefung an der Abtrennstelle dann einen größeren Öffnungswinkel für das Abtrennelement aufweist. Dadurch kann der Öffnungswinkel der keilförmigen Vertiefungen generell kleiner, d.h. spitzwinkliger gehalten werden, wodurch das Gewicht des Stranges pro Längeneinheit in vorteilhafter Weise größer ist. Die abgewinkelte Anordnung ermöglicht auch einen stabilen Querschnitt des Abtrennelements ohne die Gefahr der Quetschung von Nachbarbereichen.

Zum Anbringen der abgetrennten Auswuchtgewichte wird nach den Merkmalen des Anspruchs 20 beispielsweise eine Andrückrolle benutzt, an deren Außenumfang die Auswuchtgewichte aufgenommen sind, so daß die Auswuchtgewichte mittels eines Abrollvorgangs an der Felge mit großer Haftfähigkeit angebracht werden können. Mit winkelbeweglichen Umfangsabschnitten der Andrückrolle läßt sich das mit den Einschnitten und/oder Vertiefungen versehene Auswuchtgewicht auch an problematischen Innenbereichen der Felge, die Neigungen und/oder Krümmungen aufweisen, gut andrücken und damit dauerhaft befestigen.

Mit der in Umfangsrichtung formschlüssigen Aufnahme des Unwuchtgewichts nach den Merkmalen des Anspruchs 22 am Außenumfang der Andrückrolle ist ein winkelgenaues Anbringen der Unwuchtgewichte an der Felge und damit eine hohe Auswuchtgüte gegeben.

Ausführungsbeispiele der Erfindung sind in der Zeichnung dargestellt und werden nachfolgend näher erläutert.

Es zeigen:
- Fig. 1: einen Abschnitt eines Strangs aus miteinander verbundenen metallischen Auswuchtgewichtselementen in Draufsicht,
- Fig. 2: eine Schnittdarstellung längs der Linie I - I in Fig. 1,
- Fig. 3: eine Schnittdarstellung längs der Linie II - II in Fig. 1 einer ersten Ausführungsform der Erfindung,
- Fig. 4: eine Schnittdarstellung wie in Fig. 3 einer zweiten Ausführungsform der Erfindung,
- Fig. 5: eine Abtrenneinrichtung in schematischer Darstellung,
- Fig. 6: eine Applikationseinrichtung in schematischer Darstellung in Draufsicht,
- Fig. 7: die Applikationseinrichtung nach Fig. 6 in Seitenansicht
- Fig. 8: eine modifizierte Abtrenneinrichtung in schematischer Darstellung

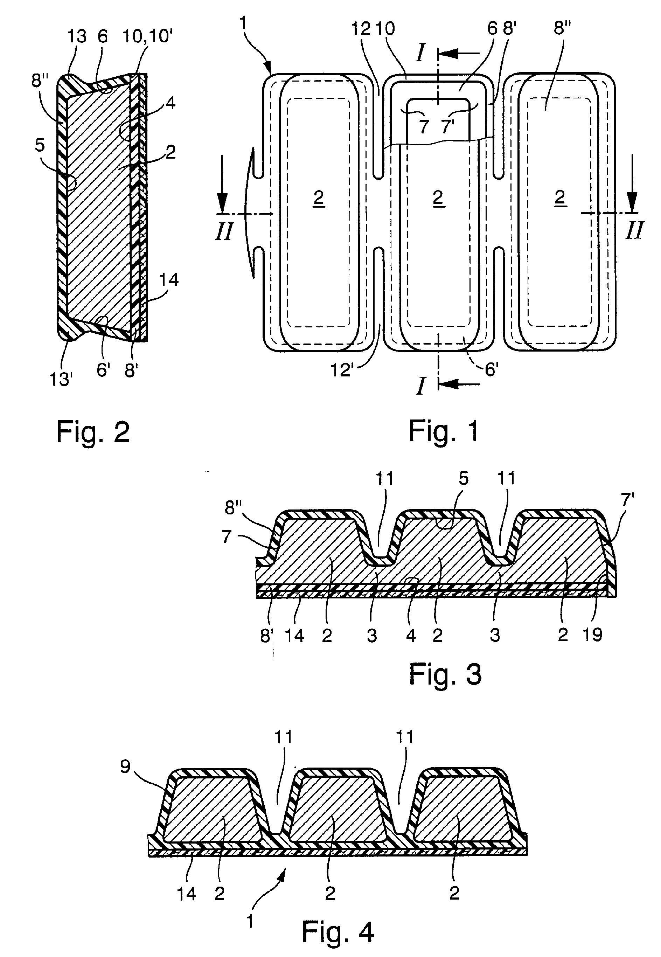

In der Fig. 1 ist ein Strang 1 aus mehreren Auswuchtgewichtselementen 2 in der Draufsicht dargestellt. Die Auswuchtgewichtselemente 2 sind in Längsrichtung des Strangs 1 äquidistant beabstandet angeordnet und stehen in Verbindung miteinander. Diese Verbindung ist bei der in Fig. 3 dargestellten ersten Ausführungsform der Erfindung über Materialfortsätze 3 der Auswuchtgewichtselemente 2 hergestellt, besteht also aus dem Material dieser Elemente, üblicherweise Blei. Die Auswuchtgewichtselemente 2 sind im wesentlichen quaderförmige Körper, deren zwischen Bodenfläche 4 und Deckfläche 5 liegende Seitenflächen 6, 6' und 7, 7' paarweise aufeinanderzu geneigt sind. Die Unwuchtgewichtselemente 2 weisen eine mehrteilige Oberflächenschicht 8', 8'' auf, die aus einer ersten Oberflächenschicht 8' in Form einer Trägerschicht bzw. Unterlage für die Auswuchtgewichtselemente 2 und einer zweiten Oberflächenschicht 8'' als Abdeckung für die Auswuchtgewichtselemente 2 besteht und die dicht miteinander verbunden sind, beispielsweise durch Verschweißen der aneinanderliegenden Randbereiche 10, 10' neben den Auswuchtgewichtselementen 2. Die Trägerschicht ist im dargestellten Ausführungsbeispiel eine hochfeste bandförmige Kunststoffschicht, kann aber aus jedem anderen geeigneten Material bestehen, wie Metall, z.B. Stahl oder Aluminium oder aus gewebeverstärktem Material. Die Abdeckung ist eine leicht verformbare z.B. thermoplastische Kunststoffschicht. Die zweite Oberflächenschicht kann aber auch als bereits in Hinblick auf die Form der Auswuchtgewichtselemente vorgeformte ggf. gewebeverstärkte Kunststoff- oder Metallfolie auf die Trägerschicht aufgebracht und mit dieser z.B. durch Schweißen oder Kleben dicht verbunden werden. Die Oberflächenschicht kann jedoch auch als einteilige Oberflächenschicht 8 ausgebildet sein, beispielsweise in Form einer Schrumpf-Schlauchfolie.

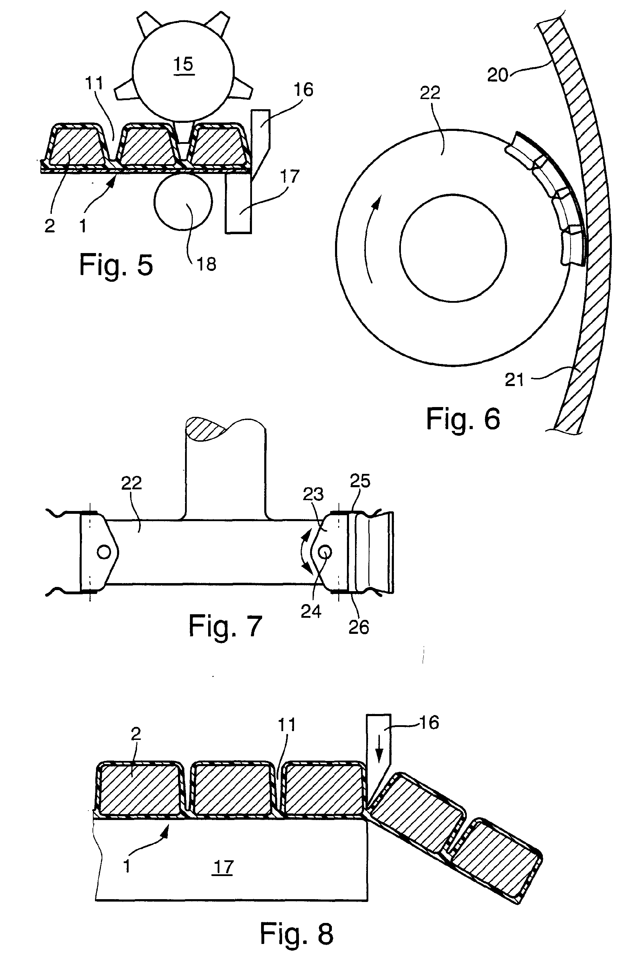

Der Strang 1 weist keilförmige Vertiefungen 11 und Einschnitte 12, 12' auf, die das Abtrennen eines aus zumindest einem Auswuchtgewichtselement 2 bestehenden Auswuchtgewichts erleichtern, wobei das abzutrennende Strangstück winklig zum Strang angeordnet sein kann, wie dies in Fig. 8 schematisch dargestellt ist.

Die Vertiefungen 11 sind darüberhinaus so ausgestaltet, daß ein Aufrollen des Strangs 1 zu einer Vorratsrolle möglich ist und ferner ein Angleich des abgetrennten Auswuchtgewichts aus mehreren Auswuchtgewichtselementen an die Krümmung einer Applikationsfläche am auszuwuchtenden Rotor erleichtert wird. Die keilförmigen Vertiefungen 11 gehen von der Deckfläche 5 aus und enden vorzugsweise stumpf am Abtrennbereich an den Materialfortsätzen 3 der Auswuchtgewichtselemente 2. Der Abtrennbereich ist so gestaltet, daß das verformbare Material der zweiten Oberflächenschicht 8'' mit der Abtrennbewegung über die Trennflächen 19 am Strang 1 und die Trennflächen am Auswuchtgewicht gezogen wird.

Die Einschnitte 12, 12' verlaufen von den die Breite des Strangs 1 begrenzenden Strang-Seitenflächen aus aufeinanderzu und definieren einen Steg zur Verbindung der Auswuchtgewichtselemente 2 miteinander; in diesem Bereich erfolgt der Trennvorgang. Darüberhinaus weisen die Einschnitte 12, 12' eine derartige Breite auf, daß eine Winkelbeweglichkeit in der Strangebene in Hinblick auf die Stranglängsachse gegeben ist, was ein Angleichen des abgetrennten Auswuchtgewichts aus mehreren Auswuchtgewichtselementen 2 an die Krümmung einer Applikationsfläche am auszuwuchtenden Rotor erleichtert.

Die Einschnitte 12, 12' können im bereits mit der Oberflächenschicht 8 bzw. 8', 8'' versehenen Strang aus Auswuchtgewichtselementen 2 angebracht werden, sie können aber auch vor jeglicher Beschichtung des Stranges 1 der zusammenhängenden Ausgleichsgewichtselemte 2 in diesem angebracht werden oder auch im Fall der mehrteiligen Oberflächenschicht 8', 8'' vor der Anbringung der zweiten Oberflächenschicht 8'' in der ersten Oberflächenschicht 8', der Trägerschicht bzw. Unterlage, angebracht werden und bei der Anbringung der zweiten Oberflächenschicht 8'' unbeschichtet bleiben.

Die Oberflächenschicht 8 bzw. im Falle einer mehrteiligen Oberflächenschicht die zweite Oberflächenschicht 8'' und erforderlichenfalls auch die Auswuchtgewichtselemente sind nahe der Deckfläche 5 der Auswuchtgewichtselemente 2 mit in Längsrichtung des Stranges 1 verlaufenden Vorsprüngen 13, 13' versehen, mittels derer eine leichte Handhabung des Strangs 1 und der abgetrennten Auswuchtgewichte ermöglicht ist. Anstelle oder zusätzlich zu den in Längsrichtung verlaufenden Vorsprüngen 13, 13' können auch Vorsprünge in Querrichtung vorgesehen werden. Statt oder gemeinsam mit den Vorsprüngen können auch Vertiefungen vorgesehen werden.

Der Strang 1 ist an der Trägerschicht bzw. Unterlage mit einer Klebeschicht 14 versehen, mit der die abgetrennten Auswuchtgewichte am Rotor angeklebt werden können. Die Klebeschicht kann nicht aktiviert sein oder bei aktivierter Klebeschicht mit einer abtrennbaren Schutzfolie versehen sein, die in der Zeichnung der Übersichtlichkeit halber nicht dargestellt ist.

In der Fig. 4 ist eine zweite Ausführungsform der Erfindung dargestellt, die sich von der ersten Ausführungsform nach den Figuren 1 bis 3 dadurch unterscheidet, daß hier die Verbindung der Auswuchtgewichtselemente 2 über das Material der Oberflächenschicht 9 erfolgt, mit anderen Worten: die einzelnen Auswuchtgewichtselemente 2 werden über die Oberflächenschicht 9 zu einem Strang 1 verbunden. Auch bei dieser Ausgestaltung kann die Oberflächenschicht 9 zweiteilig ausgeführt sein, nämlich mit einer Trägerschicht bzw. Unterlage und einer Abdekkung für die Unwuchtgewichtselemente 2, wobei für beide Schichten beispielsweise Kunststoff oder Metall als Schichtmaterial gewählt werden kann. Dargestellt in Fig. 4 ist eine einteilige Oberflächenschicht.

Bei der Herstellung des Strangs 1 aus nicht miteinander über ihr Material verbundenen Auswuchtgewichtselementen 2 werden diese im Falle einer zweiteiligen Oberflächenschicht zweckmäßigerweise zunächst auf einer bandförmigen Trägerschicht bzw. Unterlage angeordnet und dann mit der zweiten Oberflächenschicht versehen, die z.B. durch Gießen, Spritzen oder Pulverbeschichtung aufgebracht werden kann und sich fest und dicht mit der Trägerschicht verbindet. Bei der Handhabung des Strangs auftretenden mechanische Belastungen werden bevorzugt von der bandförmigen Trägerschicht aufgenommen, die dazu eine hohe mechanische Festigkeit aufweist. Auch bei dieser Ausgestaltung kann die zweite Oberflächenschicht eine vorgeformte Folie sein.

Der Strang kann beispielsweise eine Breite von 17 mm und eine Dicke von 5,5 mm haben und die Vertiefungen 11 bzw. die Einschnitte 12, 12' können im Abstand von 7,5 mm angeordnet sein, so daß das kleinste abtrennbare Auswuchtgewicht ein Gewicht von etwa 3 bis 5 Gramm haben kann.

In Fig. 5 ist schematisch eine Einrichtung zur Abtrennung von Auswuchtgewichten dargestellt, bei der der Strang 1 über ein Transportrad 15 einer Schneidevorrichtung aus Messer 16 und Gegenhalter 17 zugeführt wird. Das Transportrad 15 greift in die keilförmigen Vertiefungen 11 ein und transportiert den Strang zur Schneidevorrichtung, wo die Strangtrennung und erforderlichenfalls gleichzeitig die Beschichtung der Trennflächen vorgenommen wird. Der genaue Transport mittels des Transportrades 15 verhindert ein Anschneiden des Bleimaterials der Auswuchtgewichtselemente 2. Es liegt im Rahmen der Erfindung, für die Beschichtung der Trennflächen einen auf den Trennvorgang folgenden Beschichtungsvorgang vorzusehen. Die Zähne des Transportrades 15 können statt in die Vertiefungen 11 in die Einschnitte 12, 12' eingreifen. Dem Transportrad 15 gegenüber ist eine Führungsrolle 18 angeordnet. In Fig. 5 ist das Ende des zu einer Vorratsrolle aufgewickelten Strangs 1 dargestellt. Bei der Ausgestaltung nach Fig. 8 ist das abzutrennende Strangstück winklig zum Strang 1 angeordnet; im dargestellten Beispiel ist es an der Trennstelle um ca. 30° aus der Strangebene abgewinkelt. Die keilförmige Vertiefung 11 hat daher an der Knick- bzw. Trennstelle einen größeren Öffnungswinkel für das Messer 16. Der Abknickwinkel kann bei Bedarf auch größer als 30° gewählt werden.

Die Figuren 6 und 7 zeigen schematisch das Anbringen der abgetrennten Auswuchtgewichte an der Innenfläche 20 der Felge 21 eines auszuwuchtenden Fahrzeugrades. Das abgetrennte Auswuchtgewicht wird am Außenumfang einer Andrückrolle 22 aufgenommen und von der Andrückrolle 22 gegen die innere Felgefläche gedrückt, wobei die Andrückrolle 22 längs des Umfangs der Felge 21 abrollt. Die Andrückrolle 22 weist winkelbewegliche Umfangsabschnitte 23 auf, die eine Schwenkbewegung um einen Drehpunkt 24 durchführen können, was die Applikation des Unwuchtgewichts an gekrümmten Felgenbereichen verbessert. Die Andrückrolle ist am Ende des Rotorarms eines nicht dargestellten, handelsüblichen Montageroboters angeordnet.

Zur Aufnahme des Auswuchtgewichts sind an den beiden stirnseitigen Bereichen der winkelbeweglichen Umfangsabschnitte 23 Federklammern 25, 26 vorgesehen. Die Federklammern 25, 26 weisen Ausbiegungen auf, die in.Vertiefungen oder an Vorsprüngen an den Auswuchtgewichtselementen 22 einrasten, das Auswuchtgewicht halten und nach dem Anbringen freigeben. Nicht dargestellt ist eine Einrichtung zum formschlüssigen Fixieren des Auswuchtgewichts auf der Andrückrolle 22; hierzu sind Vorsprüngen/Vertiefungen des Auswuchtgewichts entsprechende Vertiefungen/Vorsprünge der Andrückrolle 22 zugeordnet, beispielsweise können zahnförmige Andrückrollenvorsprünge in die Vertiefungen 11 des abgetrennten Auswuchtgewichts eingreifen.

## Patentansprüche

1. Strang aus miteinander verbundenen metallischen Auswuchtgewichtselementen hoher Dichte, bei dem eine Oberflächenschicht für metallische Bereiche des Stranges vorgesehen ist und von dem Auswuchtgewichte bestimmter Größe abtrennbar sind, dadurch gekennzeichnet, daß der Strang (1) eine die Auswuchtgewichtselemente (2) einhüllende verformbare Oberflächenschicht (8, 8', 8'') aufweist und daß die Trennflächen (19) vollständig umhüllt sind.

2. Strang nach Anspruch 1, dadurch gekennzeichnet, daß die Oberflächenschicht (8, 8', 8'') durch eine den Strang (1) einhüllende verformbare Folie gebildet ist.

3. Strang aus miteinander verbundenen metallischen Auswuchtgewichtselementen hoher Dichte, bei dem eine Oberflächenschicht für metallische Bereiche des Stranges vorgesehen ist und von dem Auswuchtgewichte bestimmter Größe abtrennbar sind, dadurch gekennzeichnet, daß die metallischen Auswuchtgewichtselemente (2) eine sie vollständig umhüllende Oberflächenschicht (9) aufweisen und daß die Auswuchtgewichtselemente (2) über die Oberflächenschicht (9) zum Strang verbunden sind.

4. Strang nach einem der vorhergehenden Ansprüche 1 bis 3, dadurch gekennzeichnet, daß die Oberflächenschicht (8, 8', 8'',9) als mehrteilige Schicht aus einer ersten und einer weiteren Oberflächenschicht (8, 8'') ausgebildet ist wobei die erste Oberflächenschicht (8') als Trägerschicht bzw. Unterlage für die Auswuchtgewichtselemente ausgebildet ist und die zweite Oberflächenschicht (8'') die Auswuchtgewichtselemente (2) abdeckt und dicht mit der ersten Oberflächenschicht (8') (Trägerschicht) verbunden ist.

5. Strang nach einem der vorhergehenden Ansprüche, dadurch gekennzeichnet, daß der Strang (1) ein Flachprofil aufweist und an den die Breite des Stranges (1) definierenden Oberflächen quer zur Stranglängsrichtung verlaufende Einschnitte (12, 12') vorgesehen sind und daß zwischen den Einschnittbereichen die Auswuchtgewichtselemente (2) angeordnet sind.

6. Strang nach einem der vorhergehenden Ansprüche, dadurch gekennzeichnet, daß der Strang (1) ein Flachprofil aufweist und an mindestens einer der die Dicke des Strangs definierenden Oberflächen quer zur Stranglängsrichtung angeordnete Vertiefungen (11) vorgesehen sind, zwischen denen die Auswuchtgewichtselemente (2) angeordnet sind.

7. Strang nach Anspruch 5, dadurch gekennzeichnet, daß die Breite der Einschnitte (12, 12') eine Winkelbeweglichkeit des Stranges (1) bzw. des abgetrennten Auswuchtgewichts zu seiner Längsachse gestattet.

8. Strang nach Anspruch 6, dadurch gekennzeichnet, daß die Vertiefung (11) keilförmig ist und ein Aufrollen des Stranges (1) bzw. eine Anpassung des abgetrennten Auswuchtgewichts an die Krümmung einer Applikationsfläche gestattet.

9. Strang nach einem der vorhergehenden Ansprüche, dadurch gekennzeichnet, daß der Strang (1) einen trapezförmigen Querschnitt aufweist.

10. Strang nach einem der vorhergehenden Ansprüche, dadurch gekennzeichnet, daß die Auswuchtgewichtselemente (2) im wesentlichen die Form eines quaderförmigen Körpers aufweisen, bei dem zwischen Boden- und Deckfläche (4, 5) liegende Seitenflächen paarweise aufeinander zu geneigt sind.

11. Strang nach Anspruch 9 oder Anspruch 10, dadurch gekennzeichnet, daß an zwei gegenüberliegenden geneigten Seitenflächen (6, 6'; bzw. 7, 7') nahe der Deckfläche (5) Vorsprünge und/oder Vertiefungen angeordnet sind.

12. Strang nach Anspruch 11, dadurch gekennzeichnet, daß die Vorsprünge und/oder Vertiefungen (13, 13') an den in Längsrichtung des Stranges (1) verlaufenden Seitenflächen (6, 6') der Auswuchtgewichtselemente (2) angeordnet sind.

13. Strang nach einem der vorhergehenden Ansprüche, dadurch gekennzeichnet, daß er nur an einer der die Dicke des Stranges (1) definierenden Oberflächen mit quer angeordneten Vertiefungen (11) versehen ist und daß an der dieser Oberfläche gegenüberliegenden Oberfläche (Basisfläche) eine Trägerschicht (8') und/oder eine Klebebeschichtung (14) sowie erforderlichenfalls eine die Klebebeschichtung abdeckende trennbare Schicht vorgesehen ist.

14. Verfahren zur Herstellung eines Strangs aus miteinander verbundenen metallischen Auswuchtgewichtselementen hoher Dichte, bei dem eine Oberflächenschicht für metallische Bereiche des Stranges vorgesehen ist und von dem Auswuchtgewichte bestimmter Größe abtrennbar sind, dadurch gekennzeichnet, daß einzelne oder miteinander verbundene Auswuchtgewichtselemente (2) auf einen bandförmigen Träger aus einem zum Material der Auswuchtgewichtselemente unterschiedlichen Material aufgebracht werden und daß die Auswuchtgewichtselemente (2) oder die Anordnung aus Trägerband und aufgebrachten Auswuchtgewichtselementen (2) mit einem unterschiedlichen Material (8, 8', 8'',9) beschichtet werden.

15. Verfahren nach Anspruch 14, dadurch gekennzeichnet, daß das Trägerband im Abstand der Auswuchtgewichtselemente (2) mit gegenüberliegenden, quer zur Längsachse des Trägerbandes verlaufenden Einschnitten (12, 12') vorgegebener Breite, die das Band bis auf einen Verbindungssteg trennen, versehen wird.

16. Verfahren nach Anspruch 15, dadurch gekennzeichnet, daß die Einschnitte (12, 12') vorzugsweise vor der Beschichtung vorgenommen werden und die Einschnitträume unbeschichtet bleiben.

17. Verfahren nach einem der vorhergehenden Ansprüche, dadurch gekennzeichnet, daß die Beschichtung durch einen Gieß- oder Spritzvorgang, eine Pulverbeschichtung oder mit anderen geeigneten Verfahren vorgenommen wird.

18. Verfahren zum Vereinzeln von Auswuchtgewichten von einem Strang (1) aus miteinander verbundenen Auswuchtgewichtselementen (2), bei der die Abtrennung der Auswuchtgewichte in quer verlaufenden Strangvertiefungen (11), zwischen denen die Auswuchtgewichtselemente (2) liegen, vorgenommen wird und bei dem nach dem Abtrennen der Auswuchtgewichte das Material der Auswuchtgewichtselemente (2) vollständig von anderem Material/Materialien unhüllt ist.

19. Verfahren nach Anspruch 18, dadurch gekennzeichnet, daß zum Abtrennvorgang das abzutrennende Strangstück und das benachbarte Strangstück winklig zueinander angeordnet werden.

20. Verfahren zum Anbringen eines Auswuchtgewichts an einer Rotoroberfläche, insbesondere der Felge (21) eines Kraftfahrzeugrades, bei dem ein von einem Strang (1) aus miteinander verbundenen Auswuchtgewichtselementen (2) abgetrenntes, eine Klebeschicht (14) aufweisendes Auswuchtgewicht am Außenumfang einer Andrückrolle (22) aufgenommen wird und durch kraftbeaufschlagtes Abrollen der Andrückrolle (22) an der Felge (21) befestigt wird.

21. Verfahren nach Anspruch 20, dadurch gekennzeichnet, daß die Andrückrolle (22) winkelbeweglich zur Rollenachse angeordnete Umfangsabschnitte (23) aufweist.

22. Verfahren nach Anspruch 20 oder Anspruch 21, dadurch gekennzeichnet, daß die Winkellage des Auswuchtgewichts auf der Andrückrolle (22) durch Zuordnungen von Andrückrollenzähnen zu Vertiefungen (11) oder Einschnitten (12, 12') zwischen den Auswuchtgewichtselementen (2) fixiert ist.

23. Verfahren nach einem der vorhergehenden Ansprüche 20 bis 22, dadurch gekennzeichnet, daß die Aufnahme des Auswuchtgewichts am Außenumfang der Andrückrolle (22) durch Zuordnung von Andrückrollenvorsprüngen zu Vertiefungen des Auswuchtgewichts bzw. von Andrückrollenvertiefungen zu Vorsprüngen des Auswuchtgewichts fixiert ist.

24. Auswuchtgewicht mit einem Auswuchtgewichtselement hoher Dichte, vorzugsweise Blei, zum Ausgleich einer Rotorunwucht, dadurch gekennzeichnet, daß die Oberfläche des aus zumindest einem Auswuchtgewichtselement (2) bestehenden Auswuchtgewichts vollständig von einer Beschichtung umhüllt ist.

25. Auswuchtgewicht nach Anspruch 24, dadurch gekennzeichnet, daß die einzelnen Auswuchtgewichtselemente (2) über die Beschichtung miteinander verbunden sind.
